(19) Europäisches Patentamt
European Patent Office
Office européen des brevets

(11) Veröffentlichungsnummer: **0 263 306 A1**

(12) **EUROPÄISCHE PATENTANMELDUNG**

(21) Anmeldenummer: **87112924.3**

(22) Anmeldetag: **04.09.87**

(51) Int. Cl.$^4$: **C08F 230/08** , C08F 220/00 , C09D 3/74

(30) Priorität: **10.09.86 DE 3630793**

(43) Veröffentlichungstag der Anmeldung: **13.04.88 Patentblatt 88/15**

(84) Benannte Vertragsstaaten: **ES**

(71) Anmelder: **BASF Lacke + Farben Aktiengesellschaft**
**Max-Winkelmann-Strasse 80**
**D-4400 Münster(DE)**

(72) Erfinder: **Jung, Werner Alfons, Dr.**
**Uhrwerkerstrasse 65**
**D-4715 Ascheberg(DE)**
Erfinder: **Schmitz, Arno, Dr.**
**Lerchenhain 92**
**D-4405 Nottuln(DE)**

(54) **Silylgruppen enthaltendes verzweigtes Polymerisat, Verfahren zu seiner Herstellung, Überzugsmittel auf Basis des Polymerisats sowie deren Verwendung.**

(57) Silylgruppen enthaltendes Polymerisat, Verfahren zu seiner Herstellung, Überzugsmittel auf Basis des Polymerisats sowie deren Verwendung.

Die Erfindung betrifft Silylgruppen enthaltende Polymerisate, wobei die Silylgruppen durch ethylenisch ungesättigte Monomere der allgemeinen Formel

$$R^2 - \overset{\displaystyle R^1_{3-n}}{\underset{}{\overset{|}{Si}}} - X_n \qquad (a)$$

mit $R^1$ = Alkyl, Aryl, Acyl, Aralkyl mit 1 bis 10 Kohlenstoffatomen
$R^2$ = organischer Rest mit polymerisierbarer Doppelbindung
X = hydrolisierbare Gruppe
n = 1, 2 oder 3
in das Polymerisat eingebracht werden. Die Polymerisate sind erhältlich durch Copolymerisation von

a) 0,1 bis 40 Gew.-% der Silanmonomeren (a),

b) 5 bis 30 Gew.-%, bevorzugt 8 bis 25 Gew.-%, Monomeren mit mindestens 2 polymerisierbaren ethylenisch ungesättigten Doppelbindungen und

c) 30 bis 90 Gew.-% ethylenisch ungesättigten Monomeren ohne Gruppen mit aktivem Wasserstoff.

Die Erfindung betrifft auch feuchtigkeitshärtende Überzugsmittel auf Basis der Silylgruppen enthaltenden Polmerisate. Die Überzugsmittel eignen sich insbesondere für die Autoreparaturlackierung.

EP 0 263 306 A1

Xerox Copy Centre

# Silylgruppen enthaltendes verzweigtes Polymerisat, Verfahren zu seiner Herstellung, Überzugsmittel auf Basis des Polymerisats sowie deren Verwendung

Die Erfindung betrifft ein Silylgruppen enthaltendes Polymerisat, wobei die Silylgruppen durch ethylenisch ungesättigte Monomere der allgemeinen Formel

$$\begin{array}{c} R^1_{3-n} \\ | \\ R^2 - Si - X_n \end{array} \qquad (a)$$

mit $R^1$ = Alkyl, Aryl, Acyl, Aralkyl mit 1 bis 10 Kohlenstoffatomen
$R^2$ = organischer Rest mit polymerisierbarer Doppelbindung
X = hydrolisierbare Gruppe
n = 1, 2 oder 3
in das Polymerisat eingebracht werden.

Aus der EP-A-158 161 sind Hydroxylgruppen enthaltende verzweigte Acrylatcopolymerisate bekannt, die erhalten werden durch Copolymerisation von hydroxylgruppenhaltigen Estern der Acryl-oder Methacrylsäure, Monomeren mit mindestens 2 polymerisierbaren, olefinisch ungesättigten Doppelbindungen und weiteren ethylenisch ungesättigten Monomeren. Die verzweigten Acrylatcopolymerisate können mit Melamin-Formaldehyd-Harzen oder mit Polyisocyanaten zu einem Überzugsmittel kombiniert werden, welches bei niedrigen Temperaturen gehärtet werden kann. Die Überzugsmittel haben gute Eigenschaften in bezug auf Benzinfestigkeit und Beständigkeit gegenüber langfristiger Belastung durch Wasser bzw. Wasserdampf, wobei diese Eigenschaften insbesondere auf die verzweigte Struktur der Acrylatcopolymerisate zurückzuführen sind.

Aus der EP-A-48 461 und der EP-A-63 753 sind Vinylharze bekannt, die Silylgruppen enthalten, welche mit einem hydrolisierbaren Rest verknüpft sind. Die Silylgruppen enthaltenden Polymerisate können u.a. erhalten werden durch radikalische Polymerisation von Silylmonomeren der allgemeinen Formel

$$\begin{array}{c} R^1_{3-n} \\ | \\ R^2 - Si - X_n \end{array} \qquad (a)$$

mit $R^1$ = Alkyl, Aryl, Acyl, Aralkyl mit 1 bis 10 Kohlenstoffatomen
$R^2$ = organischer Rest mit polymerisierbarer Doppelbindung
X = hydrolisierbare Gruppe
n = 1, 2 oder 3

Darüber hinaus sind die Polymeren herstellbar durch katalytische Hydrosilylierung an die Doppelbindungen eines Polymeren mit olefinisch ungesättigten Gruppen. Die beschriebenen, in organischem Lösungsmittel gelösten Harze ergeben Einkomponenten-Überzugszusammensetzungen, die bei Verwendung geeigneter Härtungskatalysatoren unter Feuchtigkeitseinfluß bereits bei niedrigen Temperaturen aushärten.

Aus der EP-A-63 817 ist ein Metallic-Basislack bekannt, der Silylgruppen enthaltende Polymerisate, wobei die Silylgruppen an hydrolisierbare Gruppen gebunden sind, ein Acrylatharz und/oder eine Celluloseverbindung und/oder eine reaktive Silicon-Komponente enthält.

Aus den US-Patentschriften Nr. 4,499,150 und 4,499,151 sind Basislack/Klarlack-Systeme bekannt, bei denen entweder der Basislack, der Klarlack oder sowohl der Basis-als auch der Klarlack Polyadditionsprodukte mit Alkoxy-oder Acyloxysilaneinheiten enthalten. Der Basislack kann nach kurzem Ablüften mit dem Klarlack überlackiert werden. Gemäß dieser beiden Patentschriften können für das Polyacrylat alle üblichen Monomeren mit mindestens einer Doppelbindung verwendet werden. In der Beschreibung und in den Ausführungsbeispielen werden ausschließlich Monomere mit einer ethylenisch ungesättigten Doppelbindung zur Herstellung der Silylgruppen enthaltenden Acrylatcopolymerisate verwendet.

Die EP-A-159 715 beschreibt ein Silicon-Polymer, welches erhältlich ist durch Polymerisation von mindestens einem ethylenisch ungesättigten Monomeren mit reaktiven, hydrolisierbaren Silicongruppen, einer Verbindung mit mindestens zwei ethylenisch ungesättigten Gruppen und in Gegenwart eines radikalischen Initiators oder eines Polymerisationsreglers mit reaktiven Silicongruppen. Als organisches Polymeres wird beispielsweise ein Polyalkylenoxid mit reaktiven Silicongruppen verwendet. Diese reaktiven Silicongruppen sind befähigt, Kondensationsreaktionen in Gegenwart von Feuchtigkeit und in Gegenwart geeigneter Katalysatoren einzugehen. Das beschriebene feuchtigkeitshärtbare Polymere ist beispielsweise erhältlich durch Reaktion von 100 Teilen des ungesättigten Monomeren, 10 bis 1000 Teilen des Siliconpolymeren, 0,5 bis 50 Teilen der Monomeren mit mindestens zwei unabhängigen ethylenisch ungesättigten Gruppen und 0,01 bis 20 Teilen des Silicon-Reglers oder des Silicon-Initiators. Ein zu hoher Anteil an polyfunktionellem Monomer führt zum Gelieren, des weiteren ist die Gelierungstendenz abhängig sowohl vom Regler-als auch vom Initiatorgehalt.

Unter den genannten Reaktionsbedingungen ist eine Pfropfreaktion der ethylenisch ungesättigten Monomeren auf das vorgelegte Siliconharz nicht auszuschließen. In der EP-A-159 715 erfolgt die Aussage, daß ein zu hoher Anteil an polyfunktionellen Monomeren zur Gelierung des Produktes führen kann.

Die beschriebenen Zusammensetzungen führen zu einer verbesserten Zugfestigkeit des gehärteten Polymeren. Ein Nachteil der beschriebenen Zusammensetzungen besteht darin, daß ein hoher Anteil an unerwünschten Nebenreaktionen auftreten kann. Der genannten Druckschrift ist nicht zu entnehmen, daß eine Abhängigkeit zwischen der Gelierungstendenz und der Polymerisationstemperatur besteht.

Die EP-A-159 716 beschreibt Siliconharze, welche hergestellt werden durch Polymerisation von mindestens einer ungesättigten Verbindung in Gegenwart eines organischen Polymeren mit reaktiven, hydrolisierbaren Silicongruppen und mit ethylenisch ungesättigten Gruppen und mindestens einer Komponente aus der Gruppe von Siliconreglern oder Siliconinitiatoren. Das organische Polymere basiert beispielsweise auf Polyalkylenoxiden. Zusammen mit ethylenisch ungesättigten Monomeren können auch Verbindungen mit mindestens zwei ethylenisch ungesättigten Doppelbindungen polymerisiert werden, wobei auch Siliconmodifizierte Monomere verwendet werden. Ein zu hoher Anteil an mehrfach ethylenisch ungesättigten Monomeren führt zur Gelierung, gemäß der Beschreibung der EP-A-159 716 ist die Polymerisationstemperatur nicht kritisch für die Gelierungstendenz.

Die EP-A-169 536 beschreibt feuchtigkeitshärtende Systeme auf Basis eines Polymeren mit mindestens einer reaktiven Silicongruppe pro Molekül und auf der Basis von Silanolverbindungen bzw. Verbindungen, die zu Silanolen hydrolisieren können. Bei der Feuchtigkeitshärtung reagieren die Silicongruppen des Polymeren mit der Silanolverbindung in der Weise, daß ein Teil der reaktiven Silicongruppen nicht mehr als Vernetzungsstellen zur Verfügung stehen, sondern lediglich zur Kettenverlängerung dienen. Die beschriebenen Zusammensetzungen härten unter dem Einfluß von Feuchtigkeit zu einem elastomeren Material mit guter Zugfestigkeit und guten Oberflächeneigenschaften. Die Zusammensetzungen werden bevorzugt verwendet als Versiegelungsmaterialien.

Das Polymere mit mindestens einer reaktiven Silicongruppe pro Molekül kann durch Additionspolymerisation gebildet werden, wobei Monomere mit reaktiven Silicongruppen mitverwendet werden. Bei dieser Additionspolymerisation können auch Monomere mit mindestens zwei ethylenisch ungesättigten Doppelbindungen mit in das Additionspolymere eingebaut werden. In den Ausführungsbeispielen werden diese in einem Anteil von weniger als 4 Gew.%, bezogen auf das Gesamtgewicht der Monomeren, bei der Additionspolymerisation verwendet. Die Verbesserung der Elastizität der erhaltenen Überzüge wird insbesondere zurückgeführt auf den Zusatz der Silanol-Komponente.

Die Aufgabe der vorliegenden Erfindung bestand darin, Bindemittel für feuchtigkeitshärtende Einkomponenten-Beschichtungsmittel zur Verfügung zu stellen, wobei diese bei niedriger Temperatur aushärten sollten und die resultierenden Überzüge im Vergleich zu den bekannten feuchtigkeitshärtenden Siliconharzen verbesserte Eigenschaften bezüglich Benzinfestigkeit und bezüglich der Beständigkeit gegenüber langfristiger Belastung durch Wasser bzw. Wasserdampf aufweisen sollten. Die Überzugsmittel sollten sich problemlos und unter weitgehender Vermeidung von Nebenreaktionen darstellen lassen.

Die der Erfindung zugrundeliegende Aufgabe wird durch ein Silylgruppen enthaltendes Polymerisat der eingangs genannten Art gelöst, das dadurch gekennzeichnet ist, daß das Polymerisat erhältlich ist durch Copolymerisation von

a) 0,1 bis 40 Gew.% der Silanmonomeren (a),

b) 5 bis 30 Gew.%, bevorzugt 8 bis 25 Gew.%, Monomeren mit mindestens zwei polymerisierbaren ethylenisch ungesättigten Doppelbindungen und

c) 30 bis 90 Gew.% ethylenisch ungesättigten Monomeren ohne Gruppen mit aktivem Wasserstoff, wobei die Summe von a), b) und c) 100 Gew.% beträgt.

Als Silanmonomere (Komponente a) werden ethylenisch ungesättigte Monomere der allgemeinen Formel

$$\begin{array}{c} R^1_{3-n} \\ | \\ R^2 - Si - X_n \end{array} \qquad \text{(Komponente a)}$$

mit $R^1$ = Alkyl, Aryl, Acyl, Aralkyl mit 1 bis 10 Kohlenstoffatomen
$R^2$ = organischer Rest mit polymerisierbarer Doppelbindung
X = hydrolisierbare Gruppe
n = 1, 2 oder 3
eingesetzt. Die hydrolisierbare Gruppe X kann beispielsweise ein Halogenrest, ein Alkoxirest, ein Acyloxirest, ein Mercaptorest oder ein Alkenyloxirest sein

Im folgenden werden geeignete Beispiele für die Silanmonomeren aufgeführt:

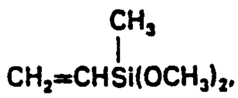

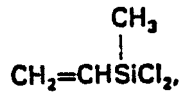

$CH_2{=}CHSi(OCH_3)_3$, $CH_2{=}CHSiCl_3$,

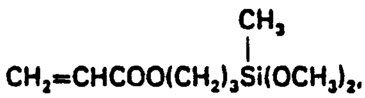

$CH_2{=}CHCOO(CH_2)_3Si(OCH_3)_3$,

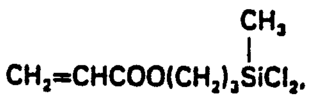

$CH_2{=}CHCOO(CH_2)_3SiCl_3$,

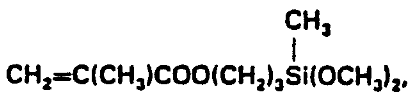

$CH_2{=}C(CH_3)COO(CH_2)_3Si(OCH_3)_3$,

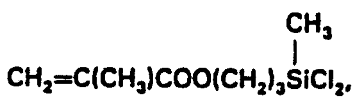

$CH_2{=}C(CH_3)COO(CH_2)_3SiCl_3$,

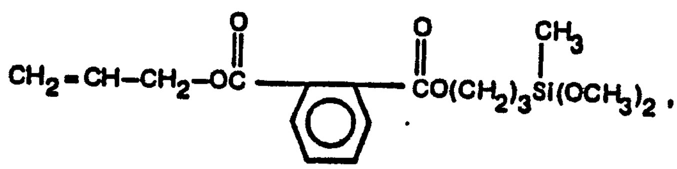

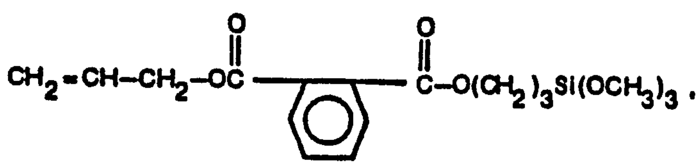

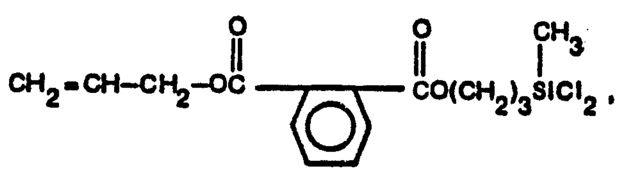

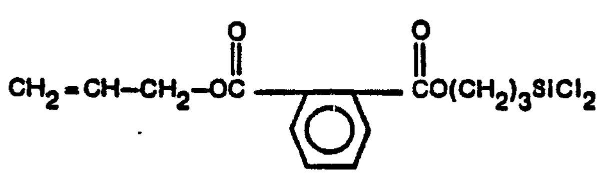

Besonders bevorzugt wird als Komponente a) γ-Methacryloxypropyltrimethoxysilan eingesetzt.

Als Komponente b) können vorteilhaft Verbindungen der allgemeinen Formel

$$CH_2 = \overset{R}{\overset{|}{C}} - \overset{O}{\overset{||}{C}} - X - (CH_2)_n - X - \overset{O}{\overset{||}{C}} - \overset{R}{\overset{|}{C}} = CH_2$$

mit
R = H, $CH_3$ oder Alkyl
X = O, NH, S
n = 2 bis 8
verwendet werden. Beispiele für derartige Verbindungen sind Hexandioldiacrylat, Hexandioldimethacrylat, Glykoldiacrylat, Glykoldimethacrylat, Butandioldiacrylat, Butandioldimethacrylat, Trimethylolpropantriacrylat und Trimethylolpropantrimethacrylat. Des weiteren ist auch Divinylbenzol als Komponente b) geeignet. Selbstverständlich können auch Kombinationen dieser mehrfach ungesättigten Monomeren verwendet werden.

Weiterhin kann die Komponente b) vorteilhaft eine mit einem ungesättigten, eine polymerisierbare Doppelbindung enthaltenden Alkohol veresterte Polycarbonsäure oder ungesättigte Monocarbonsäure sein.

Ferner kann vorteilhaft als Komponente b) ein Umsetzungsprodukt eines Polyisocyanats und eines ungesättigten Alkohols oder eines Amins verwendet werden. Als Beispiel hierfür sei das Reaktionsprodukt aus einem Mol Hexamethylendiisocyanat und zwei Mol Allylalkohol oder das Reaktionsprodukt aus Isophorondiisocyanat und Hydroxyethylacrylat genannt.

Eine weitere vorteilhafte Komponente b) ist ein Diester von Polyethylenglykol und/oder Polypropylenglykol mit einem mittleren Molekulargewicht von weniger als 1500, bevorzugt weniger als 1000, und Acrylsäure und/oder Methacrylsäure.

Als Komponente b) kommen weiterhin Umsetzungsprodukte aus einer Carbonsäure mit einer polymerisierbaren, olefinisch ungesättigten Doppelbindung und Glycidylacrylat und/oder Glycidylmethacrylat sowie Umsetzungsprodukte von Dicarbonsäuren mit Glycidylacrylat und/oder Glycidylmethacrylat in Frage. Derartige mehrfach ethylenisch ungesättigte Monomere sollten erfindungsgemäß jedoch nur in kleinen Anteilen eingesetzt werden, da sie Hydroxylgruppen enthalten, die mit den Silanmonomeren (a) reagieren können. Dies gilt auch für mehrfach ethylenisch ungesättigte Monomere, die aus Diepoxidverbindungen und ethylenisch ungesättigten Monomeren mit einer primären oder sekundären Aminogruppe gebildet werden, da diese Produkte ebenfalls Hydroxylgruppen enthalten.

Die Auswahl der ethylenisch ungesättigten Neutralmonomere (Komponente c) ist nicht besonders kritisch. Diese können ausgewählt sein aus der Gruppe Styrol, Vinyltoluol, Alkylester der Acrylsäure und der Methacrylsäure, Alkoxiethylacrylate und Aryloxiethylacrylate und die entsprechenden Methacrylate sowie Ester der Malein-und Fumarsäure. Beispiele hierfür sind Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Oxtylacrylat, 3,5,5-Trimethylhexylacrylat, Decylacrylat, Dodecylacrylat, Hexadecylacrylat, Octadecylacrylat, Octadecenylacrylat, Pentylmethacrylat, Isoamylmethacrylat, Hexylmethacrylat, 2-Ethylbutylmethacrylat, Octylmethacrylat, 3,5,5-Trimethylhexylmethacrylat, Decylmethacrylat, Dodecylmethacrylat, Hexadecylmethacrylat, Octadecylmethacrylat, Butoxiethylacrylat, Butoxiethylmethacrylat, Methylmethacrylat, Ethylmethacrylat, Propylmethacrylat, Isopropylmethacrylat, Butylmethacrylat, Cyclohexylacrylat, Cyclohexylmethacrylat, Acrylnitril, Methacrylnitril, Vinylacetat, Vinylchlorid und Phenoxiethylacrylat. Weitere Monomere können eingesetzt werden, sofern sie nicht zu unerwünschten Eigenschaften des Copolymerisats führen.

Um eine schnellere Wasseraufnahme bei der Vernetzung unter dem Einfluß von Luftfeuchtigkeit zu ermöglichen, ist es besonders vorteilhaft, wenn als zusätzliches Comonomer d) zu den ethylenisch ungesättigten Monomeren a), b) und c) bis zu 10 Gew.%, bezogen auf die Summe von a) bis d), eines ethylenisch ungesättigten Carbonsäureamids verwendet werden.

Geeignete Komponenten d) sind beispielsweise Acrylsäureamid, Methacrylsäureamid, Itakonsäurediamid, $\alpha$-Ethylacrylamid, Crotonsäureamid, Fumarsäureamid und Maleinsäurediamid.

Ggf. können bis zu 5 Gew.% auch ethylenisch ungesättigte Monomere mit einer Hydroxylgruppe, einer Carboxylgruppe oder einer Aminogruppe mit verwendet werden (Komponente e). Beispiele für Hydroxylgruppen enthaltende ethylenisch ungesättigte Monomere sind Hydroxyalkylester der Acrylsäure und/oder Methacrylsäure, z.B. Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Als Komponente e) kann auch ein Umsetzungsprodukt aus einem Mol Hydroxyethylacrylat und/oder Hydroxyethylmethacrylat und durchschnittlich 2 Mol $\epsilon$-Caprolacton sein. Als Komponente e) kann auch ein hydroxylgruppenhaltiger Ester der Acrylsäure oder der Methacrylsäure mit einer sekundären Hydroxylgruppe sein, wie beispielsweise 2-Hydroxypropylacrylat, 2-Hydroxybutylacrylat, 3-Hydroxybutylacrylat und die entsprechenden Methacrylate. Als Hydroxylgruppen enthaltendes polymerisierbares Monomer ist auch ein Umsetzungsprodukt aus Acrylsäure und/oder Methacrylsäure mit dem Glycidylester einer Carbon säure mit einem tertiären α-Kohlenstoffatom geeignet. Beispiele für ethylenisch ungesättigte Monomere mit einer Carboxylgruppe sind Methacrylsäure und Acrylsäure. Ein geeignetes ethylenisch ungesättigtes Monomere mit einer Aminogruppe ist N-tert.-Butylaminoethylacrylat.

Die Copolymerisationsreaktionen zur Herstellung der erfindungsgemäßen Polymerisate werden unter Verwendung von mindestens 2 Gew.%, bezogen auf das Gesamtgewicht der ethylenisch ungesättigten Monomeren, eines Polymerisationsreglers ohne aktive OH-oder NH-Gruppen ausgeführt, wobei vorzugsweise Mercaptosilane als Regler verwendet werden. Es ergibt sich, daß des öfteren nur bestimmte Regler für bestimmte Kombinationen der zu polymerisierenden Monomeren a) bis e) geeignet sind.

Werden beispielsweise als Komponente b) Diacrylate bzw. Dimethacrylate der allgemeinen Formel

$$CH_2 = \overset{\overset{R}{\backslash}}{C} - \overset{\overset{O}{\|}}{C} - X - (CH_2)_n - X - \overset{\overset{O}{\|}}{C} - \overset{\overset{R}{\backslash}}{C} = CH_2$$

mit

R = H, $CH_3$ oder Alkyl
X = O, NH, S
n = 2 bis 8

in einem Anteil von mehr als 10 Gew.%, bezogen auf das Gesamtgewicht aller Monomeren, polymerisiert, sollte die Polymerisation unter Verwendung von mehr als 5 Gew.%, bezogen auf das Gesamtgewicht der Monomeren, Mercaptoethyltriethoxysilan und/oder Mercaptopropylmethyldimethoxysilan, ggf. zusammen mit anderen Mercaptoverbindungen, in einem Temperaturbereich zwischen 100°C und 120°C ausgeführt werden.

Werden die zuvor genannten, mehrfach ethylenisch ungesättigten Acrylat-bzw. Methacrylatverbindungen in einem Anteil von mindestens 15 Gew.%, bezogen auf das Monomerengewicht, copolymerisiert, sollten als Monomere ohne Gruppen mit aktivem Wasserstoff (Komponente c)) vorwiegend Acrylatmonomere und/oder Methacrylatmonomere und/oder Maleinsäureund/oder Fumarsäureester verwendet werden. Die Copolymerisation sollte in Gegenwart von mehr als 6 Gew.%, bezogen auf das Monomerengewicht, eines Mercaptosilans, bevorzugt Mercaptoethyltriethoxysilan oder Mercaptopropylmethyldimethoxysilan, ggf. zusammen mit anderen Mercaptoverbindungen, ausgeführt werden.

Falls als Komponente b) mehr als 10 Gew.% Divinylaromaten, wie biespielsweise Divinylbenzol, zusammen mit den Monomeren a), c), ggf. d) und ggf. e) copolymerisiert werden, sollten als Regler vorzugsweise mehr als 10 Gew.%, bezogen auf das Monomerengewicht, Mercaptoethyltriethoxysilan und/oder Mercaptopropylmethyldimethoxysilan eingesetzt werden, um eine Gelierung des Copolymerisats zu verhindern.

Die Vorliegende Erfindung betrifft auch Verfahren zur Herstellung der zuvor genannten Silylgruppen enthaltenden Polymerisate.

Die vorliegende Erfindung betrifft auch ein Verfahren zur Herstellung eines Silylgruppen enthaltenden Polymerisats, wobei die Silylgruppen durch ethylenisch ungesättigte Monomere der allgemeinen Formel

$$R^2 - \overset{\overset{R^1_{3-n}}{|}}{Si} - X_n \qquad (a)$$

mit $R^1$ = Alkyl, Aryl, Acyl, Aralkyl mit 1 bis 10 Kohlenstoffatomen
$R^2$ = organischer Rest mit polymerisierbarer Doppelbindung
X = hydrolisierbare Gruppe
n = 1, 2 oder 3

in das Polymerisat eingebracht werden, das dadurch gekennzeichnet ist, daß zu seiner Herstellung

a) 0,1 bis 40 Gew.% der Silanmonomeren (a),

b) 5 bis 30 Gew.%, bevorzugt 8 bis 25 Gew.%, Monomere mit mindestens zwei polymerisierbaren ethylenisch ungesättigten Doppelbindungen und

c) 30 bis 90 Gew.% ethylenisch ungesättigte Neutralmonomere wobei die Summe von a), b) und c) 100 Gew.% beträgt, in einem organischen Lösungsmittel unter Verwendung von Initiatoren und unter Verwendung von mindestens 2 Gew.%, bezogen auf das Gesamtgewicht der Monomeren, Polymerisationsreglern ohne OH-und NH-Gruppen bei 80°C bis 130°C, vorzugsweise bei 90°C bis 120°C, copolymerisiert werden.

Beispiele für geeignete ethylenisch ungesättigte Monomere a) bis c) sowie für die ggf. zusätzlich zu verwendenden Monomeren d) und e) sind die zuvor genannten Beispiele für die Komponenten a) bis e) das beschriebenen Silylgruppen enthaltenden Polymerisats.

Durch geeignete Polymerisationsbedingungen läßt sich ein vovernetztes, aber nicht geliertes Copolymerisat erhalten.

Als Initiatoren kommen vorzugsweise Azoinitiatoren, wie beispielsweise Azobisisobutyronitril in Frage. Bei niedrigem Anteil am eingesetzten mehrfach ethylenisch ungesättigten Monomeren (Komponente b)) können auch Peroxyester als Initiatoren verwendet werden. Als Beispiel hierfür sei tert.-Butylperoxy-2-ethylhexanoat genannt. Selbstverständlich können auch Azo-Initiatoren mit reaktiven Silicongruppen verwendet werden. Diese werden in einem Anteil von 0,01 bis 20 Gew.-Teilen pro 100 Gew.-Teile der polymerisierbaren Monomeren eingesetzt.

Beispiele für einsetzbare reaktive Silicongruppen enthaltende Azoinitiatoren finden sich in EP-A-159 715 und EP-A-159 716.

Als Polymerisationsregler werden vorzugsweise Mercaptosilane oder Mischungen von Mercaptosilanen mit anderen Mercaptoverbindungen verwendet. Dabei kommen nur solche Mercaptoverbindungen in Frage, die nicht mit Silylgruppen reagieren, d.h. die keine OH-oder NH-Gruppen besitzen. Beispiele für geeignete, als Polymerisationsregler einsetzbare Mercaptosilane werden im folgenden aufgeführt:

$(CH_3O)_2(CH_3)SiCH_2CH_2CH_2SH$

$(CH_3CH_2O)_3SiCH_2CH_2SH$

$(CH_3O)_3SiCH_2CH_2CH_2SH$,

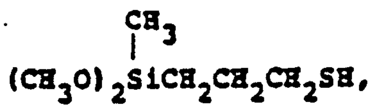

$(CH_3CH_2O)_3SiCH_2CH_2CH_2SH$,

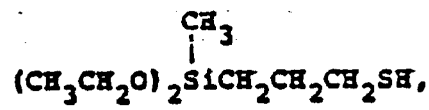

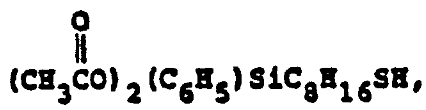

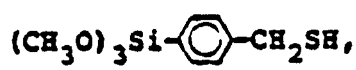

$Cl(CH_3)_2SiCH_2SH$,

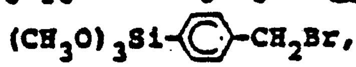

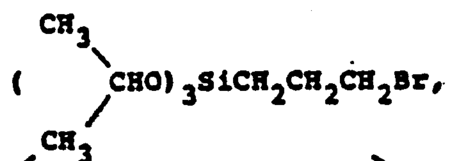

$[(CH_3O)_3SiCH_2CH_2CH_2S-]_2$,

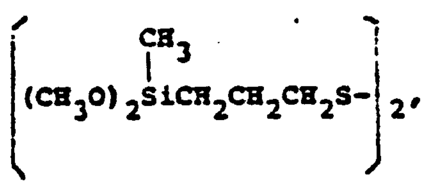

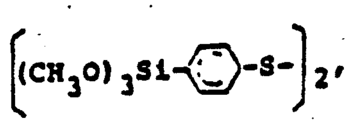

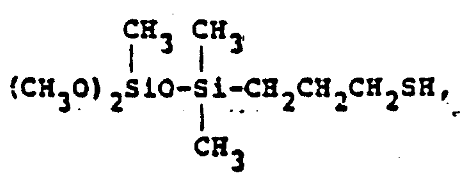

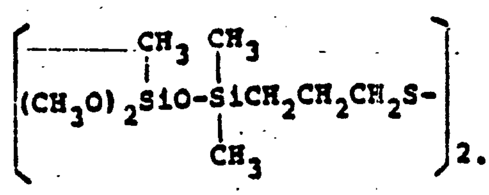

Beispiele für andere Mercaptoverbindungen sind ein n-oder t-Dodecylmercaptan.

Bei den Mercaptosilanen treten Reaktivitätsunterschiede auf. Besonders bevorzugt wird Mercaptoethyltriethoxysilan als Polymerisationsregler eingesetzt.

Vorteilhafterweise werden die Polymerisationsregler in einem Anteil von mindestens 4 Gew.-%, bezogen auf das Gesamtgewicht der Monomeren, eingesetzt.

Die radikalische Polymerisation wird bei Temperaturen von 80 - 130 °C, vorzugsweise bei 90 - 120 °C, durchgeführt. Vorteilhafterweise wird die radikalische Polymerisation zur Herstellung des Silylgruppen enthaltenden Polymerisats so durchgeführt, daß eine Lösung des Polymerisats mit einem Festkörper-Gehalt von 40 - 65 Gew.-% resultiert.

Als Lösungsmittel für die radikalische Polymerisation kommen nichtreaktive Lösungsmittel, wie beispielsweise Ester, Ether, Kohlenwassertsoffe, Alkohole und Ketone in Frage.

Die vorliegende Erfindung betrifft auch durch Feuchtigkeit härtbare Überzugsmittel, die das zuvor beschriebene Silylgruppen-enthaltende Polymerisat, organisches Lösungsmittel, ggf. Pigmente, Füllstoffe und übliche Hilfsstoffe und Additive sowie einen Vernetzungskatalysator enthalten. Ohne Zusatz eines Vernetzungskatalysators haben die Überzugszusammensetzungen eine genügend lange Topfzeit. Setzt man geeignete Vernetzungskatalysatoren zu, so härten die Überzugszusammensetzungen mit Feuchtigkeit bei Raumtemperatur oder leicht erhöhter Temperatur schnell aus.

Geeignete Vernetzungskatalysatoren sind beispielsweise Phosphorsäure, p-Toluolsulfonsäure, Zinndibutyldilaurat, Zinndioctyldilaurat, Amine, beispielsweise aliphatische Diamine, wie Ethylendiamin, Hexandiamin, aliphatische Polyamine, wie Diethylentriamin, Triethylentetramin, Tetraethylenpentamin, alicyclische Amine, wie Piperidin, Piperazin, aromatische Amine, Ethanolamin, Triethylamin, weiterhin Alkali-Katalysatoren, wie beispielsweise Kaliumhydroxyd oder Natriumhydroxyd. Vorteilhafterweise werden 0,01 bis 10 Gew.-Teile des Katalysators auf 100 Gew.-Teile des Polymeren verwendet.

Als organische Zinnverbindungen, die als Vernetzungskatalysatoren einsetzbar sind, seien weiterhin Verbindungen mit Zinn-Schwefel-Einfach-oder Doppelbindungen genannt, wie z.B.

$(n\text{-}C_4H_9)_2\ Sn(SCH_2\ COO)$,
$(n\text{-}C_8H_{17})_2\ Sn(SCH_2CH_2COO)$,
$(n\text{-}C_8H_{17})_2\ Sn(SCH_2COO\ CH_2\ CH_2\ OCO\ CH_2S)$,
$(n\text{-}C_8H_{17})_2\ Sn(SCH_2\ COO\ CH_2\ CH_2\ CH_2\ CH_2\ OCO\ CH_2S)$,
$(n\text{-}C_4H_9)_2\ Sn(SCH_2\ COO\ C_8H_{17}\text{-}iso)_2$,
$(n\text{-}C_8H_{17})_2\ Sn(SCH_2\ COO\ C_{12}H_{25}\text{-}n)_2$,
$(n\text{-}C_4H_9)_2\ Sn(SCH_2\ COO\ C_8H_{17}\text{-}iso)_2$ und
$(n\text{-}C_8H_{17})_2\ Sn = S$.

Es sind auch Mischungen der obengenannten Zinn-Schwefel-Verbindungen mit Zinn-Verbindungen, wie beispielsweise mit Dialkylzinndimaleaten, zur Katalysierung geeignet.

Weitere ebenfalls geeignete Katalysatoren finden sich in EP-A-48461 und in EPA-A-63753.

Die Erfindung betrifft auch Verfahren zur Herstellung der zuvor beschriebenen Überzugsmittel, die dadurch gekennzeichnet sind, daß das Silylgruppen enthaltende Polymerisat, organisches Lösungsmittel, ggf. Pigmente, Füllstof fe und Additive durch Mischen und ggf. Dispergieren zu einer Überzugsmasse verarbeitet werden und kurz vor der Anwendung ein Vernetzungskatalysator zugemischt wird.

Aufgrund der niedrigen Härtungstemperaturen sind die beschriebenen Überzugsmittel insbesondere geeignet für die Reparaturlackierung von Autokarossen.

Die erfindungsgemäßen Überzugsmittel sind ebenfalls hervorragend geeignet als Pigmente und/oder Metallpigmente enthaltende Basislacke oder als Decklacke oder als Basis-und als Decklacke einer Mehrschichtlackierung, welche ggf. nach dem Zweischicht-naß-in-naß-Verfahren aufgetragen werden können.

Die beschriebenen Überzugsmittel weisen verbesserte Eigenschaften in bezug auf Benzinfestigkeit und in bezug auf Beständigkeit gegenüber langfristiger Belastung durch Wasser bzw. Wasserdampf verglichen mit bekannten Siliconmodifizierten Copolymerisaten auf.

Nachfolgend wird die Erfindung anhand von Ausführungsbeispielen näher erläutert:

A) Herstellung der erfindungsgemäßen Copolymerisate

In den folgenden Beispielen beziehen sich, wenn nicht anders angegeben, alle Prozentangaben auf Gewichtsteile. Die Festkörperwerte wurden in einem Umluftofen bestimmt nach 2 Stunden bei 100°C. Die Viskositäten wurden auf einem Kegel-Platte-Viskosimeter (ICI-Viskosimeter) bei 23°C bestimmt.

Die Anteile der einzelnen Monomeren, Lösemittelmengen, Initiator-und Reglermengen sowie Polymerisationstemperatur und Bindemitteldaten sind aus der Tabelle I ersichtlich. Die Herstellung der Acrylate erfolgte in Standardapparaten (2 Liter Glasreaktoren) mit Rührer, Rückflußkühler, Zulaufgefäßen. Als Lösemittel wurde eine 1:1-Mischung aus Xylol und 1-Methoxypropyl-2-acetat verwendet. Das Lösemittelgemisch wurde vorgelegt, ein Teil wurde zum Lösen des Initiators verwendet. An Initiatoren wurden 2,2'-azobis(isobutyronitril) = I1 und 2,2'-azobis(-methylbutyronitril) = I2 verwendet. An Polymerisa-

tionsreglern wurden eingesetzt:
Mercaptoethyltrisethoxysilan = R1
Mercaptopropyltrimethoxysilan = R2
Mercaptopropylmethyldimethoxysilan = R3

Das Lösemittelgemisch wurde auf die angegebene Polymerisationstemperatur aufgeheizt, die Temperatur wurde während der ganzen Polymerisationszeit gehalten. Die angegebenen Monomerenmischungen (incl. Regler) und Initiatorlösungen wurden getrennt zudosiert.

Die Zulaufzeiten betrugen bei der Monomerenmischung (incl. Regler) 3 Stunden, bei der Initiatorlösung 3,5 Stunden, bei Beispiel 5 wurden der Initiatorzulauf 10 Minuten nach dem Monomerenzulauf gestartet, ansonsten wurde mit den beiden Zuläufen gleichzeitig begonnen; der Zulauf erfolgte gleichmäßig über die angegebene Zeit, nach Ende des Initiatorzulaufs wurde noch 2 Stunden bei der angegebenen Polymerisationstemperatur nachpolymerisiert. Die Mengen an Monomeren, Lösemittel etc. sind in T = Gewichtsteilen angegeben.

Tabelle I

| Beispiel Nr. | 1 | 2 | 3 | 4 | 5 | 6 |
|---|---|---|---|---|---|---|
| Lösemittelvorlage | 389,6T | 360,8T | 348,8T | 348,8T | 572,4 | 607,0T |
| $\gamma$-Methacryloxy-propyltrimethoxysilan | 180,0T | 180,0T | 180,0T | 180,0T | 180,0T | 96,0T |
| Hexandioldiacrylat | 120,0T | 120,0T | 120,0T | 120,0T | 90,0T | - |
| Divinylbenzol (64%ig in Ethylstyrol) | - | - | - | - | - | 84,0T |
| Methylmethacrylat | 180,0T | 180,0T | 180,0T | 60,0T | 90,0T | 180,0T |
| tert.-Butylacrylat | 120,0T | 120,0T | 120,0T | 60,0T | 60,0T | - |
| Styrol | - | - | - | 120,0T | 120,0T | - |
| n-Butylacrylat | 60,0T | 60,0T | 60,0T | 60,0T | 60,0T | - |
| 2-Ethylhexylacrylat | - | - | - | - | - | 120,0T |
| Cyclohexylmethacrylat | - | - | - | - | - | 120,0T |
| Regler | 88,8R2 | 60,0R1 | 48,0R2 | 57,0R2 | 54,0R2 | 90,0R1 |
| Initiator | 20,4 I1 | 20,4 I1 | 20,4 I1 | 20,4 I1 | 20,4 I2 | 21,0 I2 |
| Lösemittel für Init. | 319,6T | 319,6T | 319,6T | 319,6T | 102,0T | 104,0T |
| Polymerisationstemp. | 110°C | 110°C | 110°C | 110°C | 110°C | 90°C |
| Festkörper | 48,5% | geliert | 49,6% | geliert | 48,5% | 48,7% |
| Visk. (dPa.s) | 0,3 | | 2,2 | | 1,4 | 1,9 |

Die Acrylatharze aus den Beispielen 3 und 6 wurden durch Abdestillieren von Lösemittelgemisch auf einen Festkörper von 64,4 (3) und von 59,8% (6) aufkonzentriert und in dieser Form in den Lacken eingesetzt.

Die Copolymerisate der Beispiele 6, 8, 10 wurden mittels Gelpermeationschromatographie untersucht. Es wurden folgende Werte erhalten:

| Beispiel | $\overline{M}_n$ | $\overline{M}_w$ | $D = \frac{\overline{M}_w}{\overline{M}_n}$ |
|---|---|---|---|
| 6 | 2 830 | 60 000 | 21,2 |
| 8 | 3 000 | 80 000 | 26,3 |
| 10 | 3 500 | 95 000 | 26,9 |

| Beispiel Nr. | 7 | 8 | 9 | 10 | 11 |
|---|---|---|---|---|---|
| Lösemittelvorlage | 637,0T | 621,4T | 556,6T | 557,2T | 519,3T |
| γ-Methacryloxypropyltrimethosysilan | 60,0T | 60,0T | 180,0T | 180,0T | 180,0T |
| Hexandioldiacrylat | - | - | 120,0T | 120,0T | 120,0T |
| Divinylbenzol (64%ig in Ethylstyrol) | 120,0T | 120,0T | - | - | - |
| Methylmethacrylat | 180,0T | 180,0T | 120,0T | 120,0T | 120,0T |
| tert.-Butylacrylat | - | - | 120,0T | 108,0T | 84,0T |
| n-Butylacrylat | - | - | 60,0T | 60,0T | 60,0T |
| 2-Ethylhexylacrylat | 120,0T | 120,0T | - | - | - |
| Cyclohexylmethacrylat | 120,0T | 120,0T | - | - | - |
| Acrylamid | - | - | - | 12,0T | - |
| Acrylsäure/Card.Addukt (48,8%ig in Toluol)* | - | - | - | - | 73,5T |
| Regler | 90,0R1 | 104,4R3 | 38,4R3 | 38,4R3 | 38,4R3 |
| Initiator | 21,0 I2 | 21,0 I2 | 20,4 I2 | 20,4 I2 | 20,4 I2 |
| Lösemittel für Init. | 104,0T | 104,0T | 102,0T | 102,0T | 102,0T |
| Polymerisationstemp. | 90°C | 90°C | 110°C | 110°C | 110°C |
| Festkörper | geliert | 49% | 49% | 49,5% | 50,1% |
| Viskosität (dPa.s) | | 2,0 | 1,55 | 2,8 | 3,8 |

* Das Acrylsäure/Cardura E 10-Addukt wurde wie folgt hergestellt:
750 Teile Cardura E 10 (Glycidylester einer verzweigten C-10-Carbonsäure) und 988 Teile Toluol wurden zusammen mit 0,988 Teilen Hydrochinon auf 100°C aufgeheizt, innerhalb 30 Minuten wurden 238 Teile Acrylsäure zudosiert. Es wurde bei 100°C gehalten, 2,5 Stunden nach der Acrylsäure-Zugabe wurde 1 Teil eines Chromsalzkomplexes zugegeben, nach weiteren 5 Stunden bei 110°C wurden nochmals 0,1 Teile eines Chromsalzkomplexes zugegeben, nach weiteren 5 Stunden war eine Säurezahl von 18,5 (mg KOH) erreicht. Das Produkt hatte einen Festkörper von 48,8 %.

B) Herstellung erfindungsgemäßer Lacke

Klarlackzusammensetzung[1)]

| | Lack 1 | Lack 2 |
|---|---|---|
| Acrylatharz aus Beispiel 6 | 76 | |
| Acrylatharz aus Beispiel 3 | - | 47 |
| Acrylatharz aus Beispiel 1 | - | 27 |
| Polysiloxan-polyether-Lösung (0,006 %) | 4 | 4 |
| Lichtschutzmittel (HALS-Produkt)[2)] | 1,2 | 1,2 |
| UV-Absorber (Oxalanilid)[3)] | 1 | 1 |
| Butylglykolacetat | 2 | 2 |
| Butylacetat | 14,3 | 16,3 |
| Dibutyl-zinn-dilaurat-Lösung (10%ig in Xylol) | 1,5 | 1,5 |
| | 100,0 | 100,0 |
| Lackverdünnung[4)] | 27 g | 11 g |
| Spritzviskosität (DIN 4-Becher) | 18 s | 18 s |
| Verarbeitungs-Festkörper (1h/130$^{\circ}$C) | 36,5 % | 40 % |

1) Die Positionen werden nacheinander mit einem Dissolver verrührt.
2) Tinuvin 292, Ciba Geigy
3) Sandovur VSU, Sandox AG
4) Xylol/Butylacetat/Methoxy-propylacetat 1/1/1

Tabelle 2

Eigenschaftsniveau der Klarlacke[1)]

| | | Lack 1 | | | Lack 2 | | |
|---|---|---|---|---|---|---|---|
| | | RT | 30'/60°C | 20'/80°C | RT | 30'/60°C | 20'/80°C |
| Pendelhärte nach König | 24 h | 35 | 64 | 70 | 10 | 11 | 11 |
| (DIN 53 157) | 168 h | 130 | 153 | 154 | 71 | 76 | 80 |
| (gemessen auf Glas, 40 µm) | 336 h | 134 | 167 | 171 | 136 | 154 | 154 |
| Berührtrocken nach | | 4 h | Ofen | Ofen | 8 | 6 | 6 |
| Abklebetest[2)] | 24 h | leichte Markierung | i.O. | i.O. | leichte Markierung | i.O. | i.O. |
| Superbenzinbeständigkeit[3)] | n. 14 Tg. | i.O. | i.O. | i.O. | leichte Markierung | i.O. | i.O. |
| Glanz (20°) | | 78% | 82% | 84% | 70% | 75% | 75% |
| Erichsen-Tiefung (mm) (DIN 53 156) | | 5 | 5 | 5 | 6 | 6 | 6 |
| Volvo-Test (10 Runden)[4)] | | i.O. | i.O. | i.O. | Blasen | Blasen | i.O. |
| Verarbeitungs-Festkörper (18 s DIN-4-Becher) | | 36,5% | | | 40% | | |

1) Die Klarlacke wurden in einer Schichtstärke von 50 µm auf einen Polyester/Melamin/Aluminium-Flitter-Basislack appliziert.

2) Tesakrepp 4330 wird auf den Film aufgeklebt und nach 1 h wieder entfernt; Beurteilung nach Markierung.

3) Handelsübliches Superbenzin

4) 1 Runde: 4 h Lagerung bei 50°C, 2 h bei 35°C und 100% rel. Luftfeuchtigkeit, 2 h 35°C bei 100% rel. Luftfeuchtigkeit + 2 l $SO_2$ auf 300 l Luft, 16 h Lagerung bei -30°C

**Ansprüche**

1. Silylgruppen enthaltendes Polymerisat, wobei die Silylgruppen durch ethylenisch ungesättigte Monomere der allgemeinen Formel

$$\begin{array}{c} R^1_{3-n} \\ | \\ R^2 - Si - X_n \end{array} \qquad (a)$$

mit $R^1$ = Alkyl, Aryl, Acyl, Aralkyl mit 1 bis 10 Kohlenstoffatomen
$R^2$ = organischer Rest mit polymerisierbarer Doppelbindung
X = hydrolisierbare Gruppe
n = 1, 2 oder 3
in das Polymerisat eingebracht werden, dadurch gekennzeichnet, daß das Polymerisat erhältlich ist durch Copolymerisation von
a) 0,1 bis 40 Gew.-% der Silanmonomeren (a)
b) 5 bis 30 Gew.-%, bevorzugt 8 bis 25 Gew.-%, Monomeren mit mindestens 2 polymerisierbaren ethylenisch ungesättigten Doppelbindungen und
c) 30 bis 90 Gew.-% ethylenisch ungesättigten Monomeren ohne Gruppen mit aktivem Wasserstoff, wobei die Summe von a), b) und c) 100 Gew.-% beträgt.

2. Verfahren zur Herstellung eines Silylgruppen-enthaltenden Polymerisats, wobei die Silylgruppen durch ethylenisch ungesättigte Monomere der allgemeinen Formel

$$\begin{array}{c} R^1_{3-n} \\ | \\ R^2 - Si - X_n \end{array} \qquad (a)$$

mit $R^1$ = Alkyl, Aryl, Acyl, Aralkyl mit 1 bis 10 Kohlenstoffatomen
$R^2$ = organischer Rest mit polymerisierbarer Doppelbindung
X = hydrolisierbare Gruppe
n = 1, 2 oder 3
in das Polymerisat eingebracht werden, dadurch gekennzeichnet, daß zu seiner Herstellung
a) 0,1 bis 40 Gew.-% der Silanmonomeren (a),
b) 5 bis 30 Gew.-%, bevorzugt 8 bis 25 Gew.-%, Monomere mit mindestens 2 polymerisierbaren ethylenisch ungesättigten Doppelbindungen und
c) 30 bis 90 Gew.-% ethylenisch ungesättigte Monomeren ohne Gruppen mit aktivem Wasserstoff, wobei die Summe von a), b) und c) 100 Gew.-% beträgt, in einem organischen Lösungsmittel unter Verwendung von Initiatoren und unter Verwendung von mindestens 2 Gew.-%, bezogen auf das Gesamtgewicht der Monomeren, eines Polymerisationsreglers ohne OH-und NH-Gruppen bei 80 °C bis 130 °C, vorzugsweise bei 90 °C bis 120 °C, copolymerisiert werden.

3. Polymerisat oder Verfahren nach Anspruch 1 oder 2, dadurch gekennzeichnet, daß als Komponente a)
γ-Methacryloxypropyltrimethoxysilan
verwendet wird.

4. Polymerisat oder Verfahren nach Anspruch 1 bis 3, dadurch gekennzeichnet, daß die Komponente b) der allgemeinen Formel

$$CH_2 = \overset{R}{\overset{|}{C}} - \overset{O}{\overset{\|}{C}} - X - (CH_2)_n - X - \overset{O}{\overset{\|}{C}} - \overset{R}{\overset{|}{C}} = CH_2$$

mit
R = H, $CH_3$ oder Alkyl
X = O, NH, S
n = 2 bis 8
entspricht.

5. Polymerisat oder Verfahren nach Anspruch 1 bis 4, dadurch gekennzeichnet, daß die Komponente b) eine mit einem ungesättigten, eine polymerisierbare Doppelbindung enthaltenen Alkohol veresterte Polycarbonsäure oder ungesättigte Monocarbonsäure ist.

6. Polymerisat oder Verfahren nach Anspruch 1 bis 5, dadurch gekennzeichnet, daß die Komponente b) ein Umsetzungsprodukt eines Polyisocyanats und eines ungesättigten Alkohols oder eines ungesättigten Amins ist.

7. Polymerisat oder Verfahren nach Anspruch 1 bis 6, dadurch gekennzeichnet, daß die Komponente b) ein Diester von Polyethylenglykol und/oder Polypropylenglykol mit einem mittleren Molekulargewicht von weniger als 1.500, bevorzugt weniger als 1.000, und Acrylsäure und/oder Methacrylsäure ist.

8. Polymerisat oder Verfahren nach Anspruch 1 bis 7, dadurch gekennzeichnet, daß zusätzlich zu den ethylenisch ungesättigten Monomeren a), b) und c) bis zu 10 Gew.-% eines ethylenisch ungesättigten Carbonsäureamids d), wobei die Summe von a), b), c) und d) 100 Gew.-% beträgt, verwendet werden.

9. Polymerisat oder Verfahren nach Anspruch 1 bis 8, dadurch gekennzeichnet, daß zusätzlich zu den ethylenisch ungesättigten Monomeren a), b), c) und ggf. d) bis zu 5 Gew.-% e) ethylenisch ungesättigte Monomere mit einer Hydroxyl-, Carboxyl-oder Aminogruppe verwendet werden, wobei die Summe von a), b), c), ggf. d) und e) 100 Gew.-% beträgt.

10. Polymerisat oder Verfahren nach Anspruch 4, dadurch gekennzeichnet, daß mehr als 10 Gew.-% der Monomeren b) verwendet werden und ggf. noch bis zu 10 Gew.-% eines ethylenisch ungesättigten Carbonsäureamids (d) und ggf. bis zu 5 Gew.-% ethylenisch ungesättigte Monomere mit einer Hydroxyl-, Carboxyl-oder Aminogruppe (e) copolymerisiert werden, wobei die Summe von a), b), c), ggf. d) und ggf. e) 100 Gew.-% beträgt, und die Copolymerisation unter Verwendung von mehr als 5 Gew.-%, bezogen auf das Gesamtgewicht der Monomeren, Mercaptoethyltriethoxysilan und/oder Mercaptopropylmethyldimethoxysilan, ggf. zusammen mit anderen Mercaptoverbindungen bei einer Temperatur zwischen 100°C und 120°C ausgeführt wird.

11. Polymerisat oder Verfahren nach Anspruch 4, dadurch gekennzeichnet, daß die ethylenisch ungesättigten Monomeren der Komponente b) in einem Anteil von mindestens 15 Gew.-% eingesetzt werden, als Komponente c) vorwiegend Acrylat-und/oder Methacrylatmonomere und/oder Maleinsäure-und/oder Fumarsäureester eingesetzt werden, wobei die Summe aller ethylenisch ungesättigten Monomeren 100 Gew.-% beträgt, und die Copolymerisation unter Verwendung von mehr als 6 Gew.-%, bezogen auf das Monomerengewicht, eines Mercaptosilans, bevorzugt Mercaptoethyltriethoxysilan oder Mercaptopropylmethyldimethoxysilan, ggf. zusammen mit anderen Mercaptoverbindungen, ausgeführt wird.

12. Polymerisat oder Verfahren nach Anspruch 1 oder 2, dadurch gekennzeichnet, daß als Komponente b) mehr als 10 Gew.-% Divinylaromaten eingesetzt werden und die Polymerisation unter Verwendung von mehr als 10 Gew.-%, bezogen auf das Monomerengewicht, Mercaptoethyltriethoxysilan und/oder Mercaptopropylmethyldimethoxysilan ausgeführt wird.

13. Verfahren nach Anspruch 2 bis 12, dadurch gekennzeichnet, daß als Initiatoren Azoverbindungen und/oder Peroxyester verwendet werden.

14. Verfahren nach Anspruch 2 bis 13, dadurch gekennzeichnet, daß als Polymerisationsregler Mercaptosilane, ggf. zusammen mit anderen Mercaptoverbindungen, verwendet werden.

15. Verfahren nach Anspruch 14, dadurch gekennzeichnet, daß als Polymerisationsregler Mercaptoethyltriethoxysilan verwendet wird.

16. Verfahren nach Anspruch 2 bis 15, dadurch gekennzeichnet, daß mindestens 4 Gew.-%, bezogen auf das Gesamtgewicht der Monomeren, eines Polymerisationsreglers verwendet werden.

17. Verfahren nach Anspruch 2 bis 16, dadurch gekennzeichnet, daß die radikalische Polymerisation zur Herstellung des Silylgruppen-enthaltenden Polymerisats so durchgeführt wird, daß eine Lösung des Polymerisats mit einem Festkörper-Gehalt von 40 - 65 Gew.-% resultiert.

18. Durch Feuchtigkeit härtbares Überzugsmittel, enthaltend das Silylgruppenenthaltende Polymerisat nach Anspruch 1 und 3 bis 12, organisches Lösungsmittel, ggf. Pigmente, Füllstoffe und übliche Hilfsstoffe und Additive sowie einen Vernetzungskatalysator.

19. Verfahren zur Herstellung eines Überzugsmittels, enthaltend das nach den Verfahren nach Anspruch 2 bis 17 hergestellte Polymerisat, dadurch gekennzeichnet, daß das Silylgruppen-enthaltende Polymerisat, organisches Lösungsmittel, ggf. Pigmente, Füllstoffe und übliche Hilfsstoffe und Additive durch Mischen und ggf. durch Dispergieren zu einer Überzugsmasse verarbeitet werden und kurz vor der Anwendung einem Vernetzungskatalysator zugemischt wird.

20. Verwendung des Überzugsmittels nach Anspruch 18 für die Autoreparaturlackierung.

21. Verwendung des Überzugsmittels nach Anspruch 18 als Metallpigmente und/oder Pigmente enthaltender Basislack und/oder Decklack einer Mehrschichtlackierung.

Europäisches Patentamt

# EUROPÄISCHER RECHERCHENBERICHT

Nummer der Anmeldung

EP 87 11 2924

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | EP-A-0 169 536 (KANEGAFUCHI)<br>* Ansprüche 1,4; Seite 5, Zeilen 11-25; Seite 7, Zeilen 12-24; Seite 8, Zeilen 11-15; Seite 15, Zeilen 25-28; Seiten 16,17 * | 1-3 | C 08 F 230/08<br>C 08 F 22/00<br>C 09 D 3/74 |
| X | EP-A-0 075 957 (UNION CARBIDE)<br>* Ansprüche 1-6; Seite 4, Zeilen 1-10; Seite 6, Zeilen 11-35; Seite 7, Zeilen 1-30; Seite 8, Zeilen 5-15; Seite 13, Zeilen 20-27 * | 1 | |
| X | PATENT ABSTRACTS OF JAPAN, Band 8, Nr. 184 (C-239)[1621], 23. August 1984; & JP-A-59 78 222 (SANSUTAA GIKEN K.K.) 07-05-1984<br>* Zusammenfassung * | 1 | |

RECHERCHIERTE SACHGEBIETE (Int. Cl.4)

C 08 F
C 09 D
C 08 L
C 08 K

Der vorliegende Recherchenbericht wurde für alle Patentansprüche erstellt

| Recherchenort | Abschlußdatum der Recherche | Prüfer |
|---|---|---|
| DEN HAAG | 19-01-1988 | DEPIJPER R.D.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)